# EUROPEAN PATENT APPLICATION

(11) **EP 3 590 738 A1**
(43) Date of publication of application: **08.01.2020**
(21) Application number: 18181823.8
(22) Date of filing: 05.07.2018
(51) Int. Cl.: B60C 23/00

(54) **SYSTEM FOR REGULATING PRESSURE IN ONE OR MORE TIRES OF A VEHICLE**

(71) Applicant: Vestel Elektronik Sanayi ve Ticaret A.S., 45030 Manisa (TR)
(72) Inventor: BILGIN, Mert Serdar, 45030 Manisa (TR); KARATAS, Mustafa, 45030 Manisa (TR)
(74) Representative: Ascherl, Andreas

(57) **Abstract**

A system (2) for regulating pressure in one or more tires (1) of the vehicle is described, the system (2) is physically coupled to the vehicle, the system (2) comprising an air duct (3) adapted to be coupled to one or more tires (1) of the vehicle, a compressor (5) connected to the air duct (3), and adapted to enable flow of the air through the air duct (3), and a vehicle power source (6) adapted to power the vehicle to drive the vehicle, the vehicle power source (6) is further coupled to the compressor (5) and adapted to power the compressor (5) to enable the flow of air through the air duct (3).

## Description

This invention refers to a system for regulating pressure in one or more tires of the vehicle according to claim 1.

### Background of the Invention

Tire pressure regulation is generally a concern for the vehicle driver when he is driving the vehicle. Improper pressure in the tires impacts fuel efficiency of the vehicle, and in furtherance improper pressure in one or more tires may result in insufficient control over the vehicle by the driver. Sometimes, excessive pressure may result in tire burst, leading to health hazard. Even, excessive loss of air from the tire or deflation of one tire also may lead to sudden imbalance in the vehicle, and can be health hazardous. Deflation of tires may also further result in movement impairment of the vehicle.

US Patent Application Number US20160052351 discloses a dynamic tire air pressure system for a vehicle. The system includes a tire pressure sensor that measures an air pressure of a tire. The system also includes a first reservoir tank maintaining a lower air pressure than the measured air pressure of the tire. The system further includes a second reservoir tank maintaining a higher air pressure than the measured air pressure of the tire. The system additionally includes one or more valves that control deflation and inflation of the tire by selectively coupling the tire to the first or second reservoir tanks.

US Patent Application Number US20170246921 discloses a tire pressurization arrangement on a vehicle in which the pressurization of the tire is controlled by a vehicle control unit and the vehicle control unit is notified of a desired tire pressure or desired tire volume. An air flow rate in a supply line to the tire is established so that the time to pressurize the tire to the desired tire pressure/volume is calculable, or the time taken to pressurize the tire to an interval pressure/volume is calculable, said interval pressure/volume being between a current tire pressure/volume and the desired pressure/volume, and if the time to pressurize the tire to the desired pressure is exceeded, the control unit gives a warning signal and/or stops deflation or inflation.

The prior art documents have a disadvantage that they do not support pressure regulation of the vehicle while the vehicle is in moving, and further, the prior art documents do not support the vehicle with the inflated tire to be in moving condition till the time the deflation of the tire is fixed.

### Object of the Invention

It is therefore the object of the present invention is to provide a mechanism for regulating air pressure in one or more tires of a vehicle in an efficient manner, in particular while the vehicle is moving.

### Description of the Invention

The before mentioned object is solved by a system for regulating pressure in one or more tires of the vehicle according to claim 1.

A system for regulating pressure in one or more tires of the vehicle is disclosed according to the invention, the system is physically coupled to the vehicle, the system comprising an air duct adapted to be coupled to one or more tires of the vehicle, a compressor connected to the air duct, and adapted to enable flow of the air through the air duct, and a vehicle power source adapted to power the vehicle to drive the vehicle, the vehicle power source is further coupled to the compressor and adapted to power the compressor to enable the flow of air through the air duct.

This embodiment is helpful, as it provides for continous flow of air from or into the tire by using the compressor. The compressor can be functional by the vehicle power source which is generally used to drive the vehicle. This helps to enable the regulation of air pressure in the tire, while the vehicle is being driven or is powered on.

Further preferred embodiments are subject-matter of dependent claims and/or of the following specification parts.

According to a preferred embodiment of the invention, the system comprises a valve coupled to the air duct and is adapted to enable or disable air flow between the air duct and the tire.

This embodiment is beneficial as it provides for connecting the air duct to the tire only whenever the air regulation is required.

According to a further preferred embodiment of the invention, the system comprises a pressure sensor coupled to the air duct and adapted to measure a pressure of the tire when the air flow is enabled between the tire and the air duct.

This embodiment is helpful, as it provides for pressure measurement of the tires, so that the user can be provided with the pressure reading of one or more tires, so that the user can functionalize the valve and/or the compressor for enabling pressure flow in the air duct.

According to another embodiment of the system, the valve is placed between the pressure sensor and the compressor.

This embodiment is helpful, as such position of the valve enables the pressure sensor to make more accurate reading of the air pressure in a particular tire.

According to a further preferred embodiment of the invention, the system comprises a tire lock switch provided onto a rim of the tire and an aperture provided on rim of the tire allowing flow of air into a flexible cavity of the tire, wherein the tire lock switch is adapted to physically couple the air duct with the aperture.

This embodiment is helpful, as it provides for further mechanism to enable and disable flow of the air into the flexible cavity of the tire.

According to another embodiment of the system, the tire lock switch is adapted to be either in an activated position or a deactivated position, wherein if the tire lock switch is in activated position, the tire lock switch is enabled to lock or unlock the air duct to the aperture of the rim, and if the tire lock switch is in deactivated position, the tire lock switch is disabled to lock or unlock the air duct to the rim of the tire.

This embodiment is helpful, as it provides an option to the user to disable or enable the system for any air pressure regulation for a particular tire. Once, the tire switch lock is deactivated, the air duct cannot be connected to the aperture of tire, and hence any pressure regulation shall be disabled for that particular tire.

According to a further embodiment of the system, the tire lock switch is placed such that the tire lock switch is adapted to be triggered into the activated position or the deactivated position before positioning the tire onto an axle of the vehicle.

This embodiment is beneficial, as it reduces any chance for accidentally activating or deactivating the switch lock, and that any activation and deactivation has to be manually handled by the user of the vehicle.

According to another embodiment of the invention, the system comprises an air flow cavity coupled to the rim or provided as part of the rim, the air flow cavity is physically coupled to the aperture provided on the rim, and an air transfer point provided onto the rim, in proximity to the periphery of the rim, physically coupled to the air flow cavity for enabling air flow into or out of the flexible cavity.

This embodiment is beneficial, as provides for a structure, which systemizes flow of the air between the flexible cavity and the air duct via the aperture.

According to a further embodiment of the invention, the system comprises a controller adapted to control at least one of the compressor, or the valve, or the tire lock switch, or a combination thereof.

This embodiment is beneficial, as it helps in handling of the compressor, valve or the tire lock switch automatically, without human intervention.

According to another embodiment of the system, the pressure sensor is adapted to generate a pressure data related to the pressure in at least one of the tires of the vehicle, and the controller is adapted to receive the pressure data and is adapted to control at least one of the compressor, or the valve, or the tire lock switch, or a combination thereof, based on the pressure data.

This embodiment is beneficial, as it helps in functioning of the controller based on the measurement of the pressure in one or more tires of the vehicle. This provides for an efficient regulation of the air pressure in the tires.

According to a further preferred embodiment of the invention, the system comprises a memory adapted to store pressure data over a period of time, wherein the controller is adapted to retrieve the pressure data over the period of time, adapted to compare the pressure data, and to raise an alarm trigger based on the comparison, and an alarm adapted to receive the alarm trigger and adapted to raise an alarm signal.

This embodiment is beneficial, as it enables the system to warn the user of the vehicle, if the issue is not of air pressure regulation, rather it is with respect to fixing other issues in tire, like puncturing of tire, etc.

According to another embodiment of the system, the controller is adapted to detect rotating frequency of the tire and adapted to control at least one of a switching frequency of the tire lock switch for locking and unlocking the aperture of the rim to the air duct, or an air flow frequency for flowing of air from the air duct into the tire, or combination thereof.

This embodiment is beneficial, as it helps to efficiently manage the flow of air into or from the flexible cavity, even when the tire is rotating.

According to a further embodiment of the invention, the system comprises separate air ducts for each tire connected to the compressor.

This embodiment is beneficial, as it provides for simple implementation of air ducts for regulating air pressure in each of the tires efficiently and independently.

According to a further preferred embodiment of the invention, the system comprises a closed air duct unit comprising air duct branches branched out for each of the tires, and the compressor is located within the closed air duct unit and is placed before branching of the closed air duct unit.

This embodiment is beneficial, as it provides for another simple and efficient implementation of the system, so that air pressure in each of the tires can be regulated efficiently and independently.

According to another embodiment of the invention, the system comprises at least one pressure sensor for each of the tire, or one valve for each of the tire, or a combination thereof.

This embodiment is beneficial, as it provides for efficient air pressure measurement and/or regulation for each of the tires efficiently.

Further benefits, goals and features of the present invention will be described by the following specification of the attached figures, in which components of the invention are exemplarily illustrated. Components of the devices and method according to the inventions, which match at least essentially with respect to their function, can be marked with the same reference sign, wherein such components do not have to be marked or described in all figures.

The invention is just exemplarily described with respect to the attached figure in the following.

### Brief Description of the Drawings

Fig. 1 illustrates a schematic diagram of a system for regulating an air pressure of the tire of the vehicle, according to an embodiment of the invention.
Fig. 2 illustrates an embodiment of the system for regulation of air pressure showing a closed air duct unit attached to all the tires of the vehicles, according to an embodiment of the invention.
Fig. 3 illustrates a tire having a structure on the rim of the tire for enabling regulation of the air pressure in the tire when attached to the air duct, according to an embodiment of the invention.
Fig. 4a illustrates disconnection of the air duct to an aperture provided onto the rim, according to an embodiment of the invention.
Fig. 4b illustrates connection of the air duct to the aperture provided onto the rim, according to an embodiment of the invention.
Fig 5. Illustrates a flow chart illustrating functioning of the system for pressure measurement and regulations, according to an embodiment of the invention.

### Brief Description of the Drawings

The present invention focuses on measuring air pressure, and further, if the air pressure is not optimal, regulates the air pressure in each of the tires. This invention helps in regulation of the air pressure in the tire in a self-sustained way, so that no external elements shall be required for regulating the air pressure in the tires of the vehicle. The unique aspect of the invention is, it works even while the vehicle is in moving position. Another unique point of the invention is that it keeps the vehicle in movement even when any of the tires is punctured, or deflated, at least till the time, the vehicle has reached the nearest service station for servicing the problematic tire.

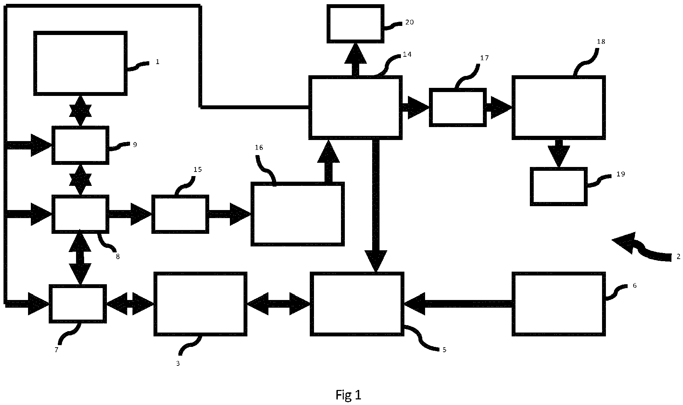

Fig. 1 shows a system 2 for regulating an air pressure of at least one tire 1 of the vehicle. The system includes an air duct 3, a compressor 5, and a vehicle power source 6. The air duct 3 is coupled to the tire 1, so that it allows to flow the air into the tire 1, and out of the tire 1. The air duct 3 is further connected to the compressor 5. The compressor 5 facilitates flowing of the air into the tire 1, and out of the tire 1 via the air duct 3. The vehicle power source 6 is generally provided to facilitate driving and running of the vehicle, however, in the system 2, the vehicle power source 6 is further coupled to the compressor 5, so that the vehicle power source 6 can further power the compressor 5 to facilitate it's functioning of enabling of the air flow into the tire 1, and out of the tire 1 via the air duct 3.

The system 2 further includes a valve 7 which is physically coupled to the air duct and disable or enable flow path of the air between the tire 1 and the compressor 5. The valve 7 cut off the air flow path by blocking the air duct 3 and open the air flow path by unblocking the air duct 3. In an alternate embodiment, the valve 7 is not required, as the air flow path is always remained opened, and the flow path can be just maintained by functioning of the compressor 5 alone.

The system 2 also includes a pressure sensor 8, which is coupled to the air duct 3, and is to be placed in the air flow path, so that once the air flow path is established between the tire 1, and the air duct 3, the pressure sensor can sense the air pressure in the particular tire to which the air duct 3 is coupled to. In an alternate embodiment, the pressure sensor 8 is not required, however a user uses his wisdom or experience to switch on or switch of the compressor 5 for the regulation of the air pressure in the tire 1.

The valve 7 is placed between the pressure sensor 8 and the compressor 5. This placement of the valve 7 is specifically helpful, as initially, the air flow path is not required to be established up to the compressor 5, and hence the valve 7 may remain closed initially. This helps to establish the flow path in the air duct 3 only up to the valve 7 via the pressure sensor 8. In this way, the pressure sensor 8 is enabled to measure the air pressure, however the regulation of the air pressure is not started because of closing of the valve 7. Once the air pressure reading of a particular tire is known, the user of the vehicle can open the valve 7 if the air pressure in the tire 1 is not optimal. Once the valve 7 is opened, the air flow path is established up to the compressor 5, thus enabling flow of air into the tire 1, or out of the tire 1, as the case may be. In an alternate embodiment, the pressure sensor 8 can be placed after the valve 7, however in such scenario, the regulation of the air flow can only be controlled by keeping the compressor 5 in switched off mode, till the time the pressure sensor has measured the air pressure in particular tire. Once the pressure reading is established, the compressor 5 can be switched on to establish the air flow path either from the tire 1 to the compressor 5, or in opposite direction, as the case may be.

The system 2 also includes a tire lock switch 9, which is provided on a rim of the tire 1, and an aperture, which is also provided on the rim of the tire 1. The tire lock switch 9 physically couples the air duct 3 to the aperture. Once, this coupling of the aperture and the air duct 3 is established, the aperture further directs flow of the air into a flexible air cavity of the tire 1 or out of the flexible air cavity of the tire. In an alternate embodiment of the invention, the tire lock switch 9 is not required, however any other mechanism can be used to establish the connection between the flexible cavity of the tire and the air duct 3 for flowing in and out of the air from the tire 1. Also, the aperture is not required in another embodiment, however already available air filling valve of the tire 1 can be used, which is generally used to fill in air inside the flexible cavity of the tire in normal course.

The system 2 also includes a controller which is functionally coupled to the compressor 5, the valve 7, and the tire lock switch 9, so that the controller 7 controls each of them. The controller 14 controls the compressor 5 to set a flow direction of the air to or from the tire 1, or even the amount of the air to be flown in the tire 1 or out of the tire 1, or changing flow speed of the air, or even enabling the air to be flown in or out of the tire 1 intermittently. The controller 14 controls the valve 7 to be open or close, or even partially open or close, so that the air flow path can be hindered or regulated between the tire 1 and the compressor 5. The controller 14 controls the tire lock switch 9 to lock or unlock the air duct 3 to the aperture of the rim of the tire, or even a frequency at which the tire lock switch shall lock and unlock the air duct 3 with the aperture of the rim of the tire 1. In one embodiment, the controller only controls, any one or two of the compressor 5, valve 7 or the tire lock switch 9.

The pressure sensor 8 also generates a pressure data 15 based on the measurement of the air pressure inside a particular tire. This pressure data 15, is further sent to the controller 14, which processes the pressure data 15, and controls at least one of the compressor 5, the valve 7, or the tire lock switch 9, or a combination thereof based on processing of the pressure data 15. In one embodiment, the controller 14 does not require the pressure data 15 for controlling the compressor 5, valve 7, or the tire lock switch 9, and the controller 14 is actuated by the user itself for controlling, the compressor 5, valve 7, or the tire lock switch 9.

The system 2 also includes a memory 16 which stores the pressure data 15 generated by the pressure sensor 8 at different time intervals. The controller 14 retrieves the pressure data 15 from the memory 16 which was captured and stored by the memory 16 at different time intervals and compares the pressure data 15 of different time intervals and identify if the pressure in the tire has not changed, or has not substantially changed even after pressure regulation, and based on such identification the controller 14 generates an alarm trigger 17. The system also includes an alarm 18, which receives a signal from the alarm trigger 17 and raises an alarm signal 19 based on the alarm trigger 17. This mechanism warns the user of the vehicle, if there is a problem in the tire which cannot be rectified through pressure regulation, so that the user of vehicle can take the vehicle for service at the earliest. In an alternate embodiment, this warning mechanism is not required and the system just regulates the air pressure in the tire, and in such scenario, the memory 16 and the alarm 18 is not required.

While the vehicle is moving, the tire keeps on rotating, hence, the controller identifies a rotating frequency 20 of the tire 1, and based on the rotating frequency 20, the controller 14 controls at least one of a switching frequency of the tire lock switch 9 for locking and unlocking the aperture of the rim to the air duct 3, or an air flow frequency for flowing of air from the air duct 3 into the tire 1, or a combination thereof. This helps in efficiently regulating the air when the tire 1 is rotating. In an alternate embodiment, where such mechanical structure in the rim of the tire is not provided, or when the air pressure regulation is carried out when the vehicle is not moving, such detection of the rotating frequency 20 is not required, and accordingly controlling of switching frequency of the tire switch lock, or air flow frequency is not required.

In one embodiment, separate air ducts 3 for each of the tires 1 of the vehicle is provided, such that each of the air ducts 3 are physically coupled to the compressor 5, and enabled to be coupled to each of the tire 1 when the air pressure regulation mechanism is required in any of the tires 1.

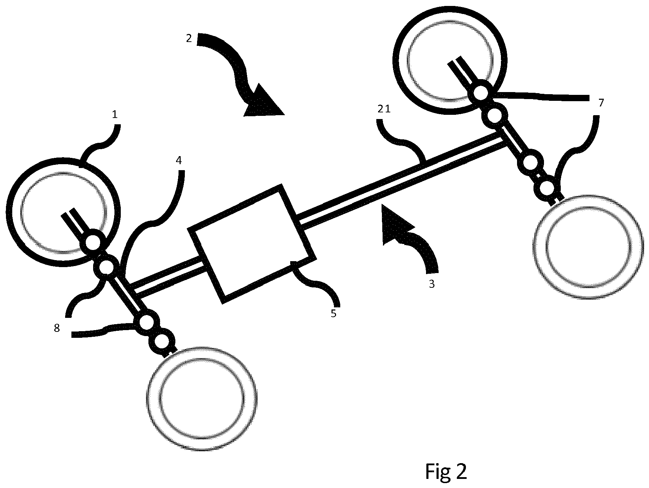

Fig. 2 shows an embodiment of the system 2 for regulation of air pressure inside each of the tires 1 of the vehicle. The system 2 is provided with a closed air duct unit 3 which has one main stem 21, and four air duct branches 4 connectable to each of the tires 1. The main stem 21 runs through the middle of the vehicle and is also provided with the compressor 5. This placement of the compressor 5 helps the compressor 5 to be accessible by each of the air duct branch 4. Each of the air duct branch 4 is coupled to one valve 7, and one air pressure sensor 8. The valve 7 is placed between the pressure sensor 8 and the compressor 5. The structure provided in this embodiment of this system helps in individual measurements of air pressure in each of the tires 1, and further regulation of the air pressure in each of the tires 1. When the car is started, each of the valve 7 shall be closed, and each pressure sensor 8 shall measure pressure in each of the tires, and only those valves 7 are opened, whose corresponding pressure sensor 8 has measured non-optimal pressure in the tire 1. Hence, the air flow path for air pressure regulation between the compressor 5 and the tire 1 shall be established for the tire/s 1 which have more or less pressure with respect to prescribed pressure or a pressure range.

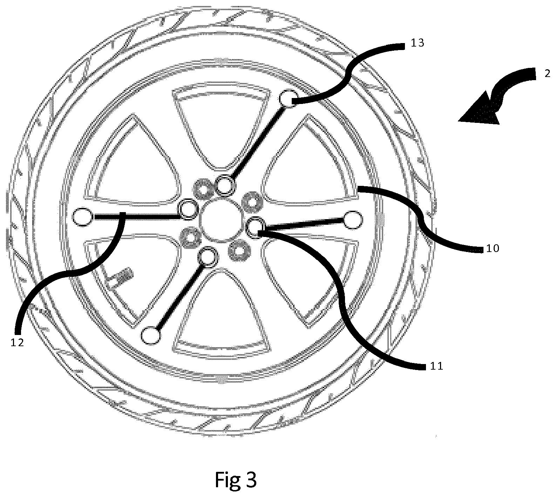

Fig. 3 shows a tire 1 having a structure on a rim 10 of the tire 1 for enabling regulation of the air pressure in the tire 1 when attached to the air duct. The rim 10 is provided with a set of apertures 11, a set of air flow cavities 12, and a set of air transfer points 13. Each of the air flow cavity 12 is coupled to the rim 10 and is physically coupled to the aperture 11 provided on the rim 10. Each of the air transfer point 13 is provided onto the rim 10, and in proximity to periphery of the rim 10. The air transfer points 13 are physically coupled to the air flow cavities 12 for enabling air flow into or out of the flexible cavity. In an alternate embodiment, the air flow cavity 12 can be provided as part of the rim 10. This structure provided on the rim helps in facilitating air flow into or out of the tire 1, when the tire is rotating.

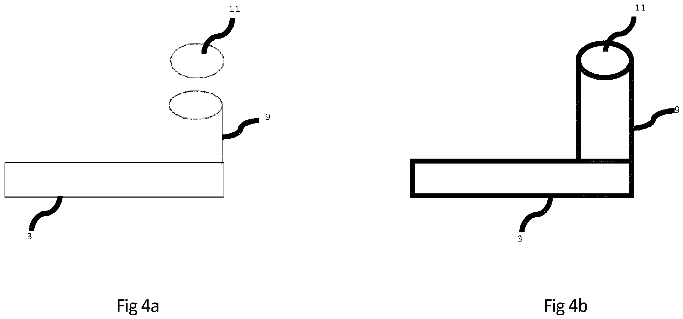

Fig. 4a and 4b shows the air duct 3 and the aperture 11 of the rim to be in locked and unlocked position. In Fig 4a, the air duct 3 is shown to be disconnected to the aperture 11, and the tire switch lock 9 is not connected to the aperture 11. While, In Fig 4b, the air duct 3 is shown to be connected and locked to the aperture 11 via the tire switch lock 9.

In one embodiment, the tire switch lock 9 can be either in an activated position or a deactivated position. If the tire lock switch 9 is in activated position, the tire lock switch 9 is enabled to lock or unlock the air duct 3 to the aperture 11 of the rim. And, if the tire lock switch 9 is in deactivated position, the tire lock switch 9 is disabled to lock or unlock the air duct 3 to the rim of the tire.

In one embodiment, the tire lock switch 9 is physically located in such a way that they are minimally exposed while the tire is in motion. Also, the tire lock switch 9 can be structured in such a way, that when the tire is placed on the axle of the vehicle, it cannot be triggered into activated position. Hence, the user is required to activate or deactivate tire lock switch 9 before placing the tire on the axle.

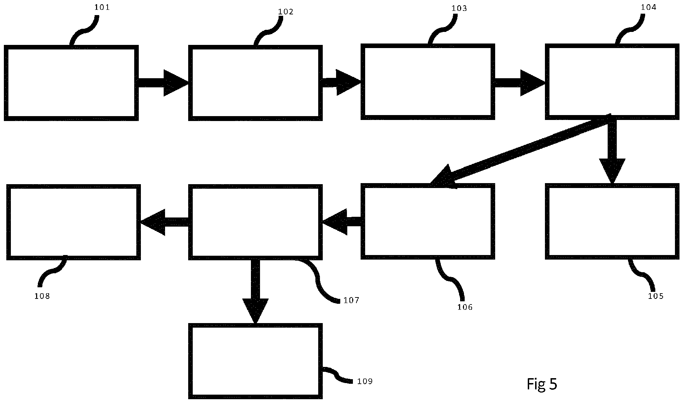

Fig 5. shows a flow chart illustrating functioning of the system for pressure measurement and regulations. In step 101, the system is activated when the vehicle power source is switched on. In step 102, the connection between the air duct and the tire is established. In step 103, pressure of all the tires are measured. In step 104, the system checks, if there is any problem with respect to pressure in any of the tires. If the problem is identified in any of the tire's pressure, that specific tire is treated by the system to be at a set pressure value in step 105. In case, if all the tires have the pressure at the set value, no action is taken by the system, and the system again moves to monitoring of the pressure in step 106. In step 107, the system checks if the pressure in the treated tire/s remains to the set value or not. If the tire/s pressure remains at the set value, the system moves into monitoring of the tire pressure in step 108. In case, the tire/s pressure move away from the set value, the system determines it to be a fault which cannot be rectified by tire pressure regulation, rather a service of the tire or the vehicle is required, accordingly the system shall alarm the user of the vehicle in step 109.

Thus, the present invention provides for a system 2 for regulating pressure in one or more tires 1 of the vehicle. The system 2 is physically coupled to the vehicle. The system 2 includes an air duct 3 which is coupled to one or more tires 1 of the vehicle, a compressor 5 connected to the air duct 3, and enables flow of the air through the air duct 3, and a vehicle power source 6 which powers the vehicle to drive the vehicle, the vehicle power source 6 is further coupled to the compressor 5 and powers the compressor 5 to enable the flow of air through the air duct 3.

### List of reference numbers

- 1: tire
- 2: system
- 3: air duct/ air duct unit
- 4: air duct branch
- 5: compressor
- 6: vehicle power source
- 7: valve
- 8: pressure sensor
- 9: tire lock switch
- 10: rim
- 11: aperture
- 12: air flow cavity
- 13: air transfer point
- 14: controller
- 15: pressure data
- 16: memory
- 17: alarm trigger
- 18: alarm
- 19: alarm signal
- 20: rotating frequency of the tire
- 21: main stem
- 101: Step of activating the system
- 102: Step of connecting the air duct and the tire
- 103: Step of checking pressure in each of the tires
- 104: Step of identifying problem with pressure of any of the tires
- 105: Step of treating the tire by regulating the tire pressure
- 106: Step of taking no action for pressure regulation, and moving on monitoring of tire pressure
- 107: Step of checking pressure of the treated tire, after treatment
- 108: Step of moving to the monitoring of tire pressure, if the tire is found to be treated
- 109: Step of alarming the driver, if problem is identified in the treated tire.

## Claims

1. A system (2) for regulating pressure in one or more tires (1) of a vehicle, the system (2) is physically coupled to the vehicle, the system (2) comprising:
- an air duct (3) adapted to be coupled to one or more tires (1) of the vehicle;
- a compressor (5) connected to the air duct (3), and adapted to enable flow of the air through the air duct (3); and
- a vehicle power source (6) adapted to power the vehicle to drive the vehicle, the vehicle power source (6) is further coupled to the compressor (5) and adapted to power the compressor (5) to enable the flow of air through the air duct (3).

2. The system (2) according to the claim 1 comprising:
- a valve (7) coupled to the air duct (3) and is adapted to enable or disable air flow between the air duct (3) and the tire (1).

3. The system (2) according to any of the claims 1 or 2 comprising,
- a pressure sensor (8) coupled to the air duct (3) and adapted to measure a pressure of the tire (1) when the air flow is enabled between the tire (1) and the air duct (3).

4. The system (2) according to the claim 3, wherein the valve (7) is placed between the pressure sensor (8) and the compressor (5).

5. The system (2) according to any of the claims 1 to 4 comprising:
- a tire lock switch (9) provided onto a rim (10) of the tire (1); and
- an aperture (11) provided on the rim (10) of the tire (1) allowing flow of air into a flexible cavity of the tire (1),
wherein the tire lock switch (9) is adapted to physically couple the air duct (3) with the aperture (11).

6. The system (2) according to claim 5, wherein the tire lock switch (9) is adapted to be either in an activated position or a deactivated position, wherein if the tire lock switch (9) is in activated position, the tire lock switch (9) is enabled to lock or unlock the air duct (3) to the aperture (11) of the rim (10), and if the tire lock switch (9) is in deactivated position, the tire lock switch (9) is disabled to lock or unlock the air duct (3) to the rim (10) of the tire (1).

7. The system (2) according to the claim 6, wherein the tire lock switch (9) is placed such that the tire lock switch (9) is adapted to be triggered into the activated position or the deactivated position before positioning the tire (1) onto an axle of the vehicle.

8. The system (2) according to any of the claims 5 to 7 comprising:
- an air flow cavity (12) coupled to the rim (10) or provided as part of the rim (10), the air flow cavity (12) is physically coupled to the aperture (11) provided on the rim (10); and
- an air transfer point (13) provided onto the rim (10), in proximity to the periphery of the rim (10), physically coupled to the air flow cavity (12) for enabling air flow into or out of the flexible cavity.

9. The system (2) according to any of the claims 1 to 8 comprising:
- a controller (14) adapted to control at least one of the compressor (5), or the valve (7), or the tire lock switch (9), or a combination thereof.

10. The system (2) according to claim 9, wherein the pressure sensor (8) is adapted to generate a pressure data (15) related to the pressure in at least one of the tires (1) of the vehicle, and the controller (14) is adapted to receive the pressure data (15) and is adapted to control at least one of the compressor (5), or the valve (7), or the tire lock switch (9), or a combination thereof, based on the pressure data (15).

11. The system (2) according to the claim 10 comprising:
- a memory (16) adapted to store pressure data (15) over a period of time, wherein the controller (14) is adapted to retrieve the pressure data (15) over the period of time, and adapted to compare the pressure data (15), and to generate an alarm trigger (17) based on the comparison; and
- an alarm (18) adapted to receive the alarm trigger (17) and adapted to raise an alarm signal (19).

12. The system (2) according to any of the claims 9 to 11, wherein the controller (14) is adapted to detect a rotating frequency (20) of the tire (1) and adapted to control at least one of a switching frequency of the tire lock switch (9) for locking and unlocking the aperture (11) of the rim (10) to the air duct (3), or an air flow frequency for flowing of air from the air duct (3) into the tire (1), or a combination thereof.

13. The system (2) according to any of the claims 1 to 12, wherein the system (2) comprises separate air ducts (3) for each tire (1) connected to the compressor (5).

14. The system (2) according to any of the claims 1 to 12, wherein the system (2) comprises a closed air duct unit (3) comprising air duct branches (4) branched out for each of the tires (1), and wherein the compressor (5) is located within the closed air duct unit (3) and is placed before branching of the closed air duct unit (3).

15. The system (2) according to any of the claims 13 or 14, wherein the system (2) comprises at least one pressure sensor (8) for each of the tire (1), or one valve (7) for each of the tire (1) or a combination thereof.
